# EUROPÄISCHE PATENTSCHRIFT

(11) **EP 1 393 991 B1**
(45) Veröffentlichungstag und Bekanntmachung des Hinweises auf die Patenterteilung: **24.05.2006**
(21) Anmeldenummer: 03016520.3
(22) Anmeldetag: 22.07.2003
(51) Int. Cl.: B60R 21/20

(54) **Gassackmodul**
Airbag Module
Module d'airbag

(30) Priorität: 27.08.2002 DE 20213144 U; 08.01.2003 DE 20300171 U
(43) Veröffentlichungstag der Anmeldung: 03.03.2004
(73) Patentinhaber: TRW Automotive Safety Systems GmbH, 63743 Aschaffenburg (DE)
(72) Erfinder: Helmstetter, Mathias, 63743 Aschaffenburg (DE)
(74) Vertreter: Kitzhofer, Thomas

(56) Entgegenhaltungen:
- DE-A- 10 155 856
- DE-A- 19 541 180
- DE-U- 20 303 303
- DE-U- 29 816 925
- US-A- 5 427 406

## Beschreibung

Die Erfindung betrifft ein Gassackmodul gemäß dem Oberbegriff des Anspruch 1

Zur Befestigung eines Gassacks am Modulgehäuse wird standardmäßig ein sogenannter Haltering oder Retainerring eingesetzt, der in den Einblasmund des Gasgenerators eingelegt wird und der z.B. mit Gewindebolzen versehen ist, die durch in am Gassack und am Gehäuse vorgesehene Öffnungen ragen, so daß über eine Verschraubung der Gassack sicher mit dem Gehäuse verbunden werden kann. Der Haltering klemmt dabei das Gewebe rund um den Einblasmund des Gassacks am Gehäuse fest. Der Haltering kann zusätzlich einen Flansch des Gasgenerators erfassen, so daß auch dieser über den Haltering am Gehäuse festgelegt werden kann.

Aus der gattungsgemäßen DE-A-101 55 856 ist ein Gassackmodul bekannt, bei dem der Gassack und der Haltering durch separate Rastbolzen mit einem Lenkradskelett verbunden werden. Die Rastbolzen werden von der Innenseite des Gassacks eingesetzt und durch Öffnungen im Haltering und entsprechende Öffnungen im Lenkradskelett geschoben, bis Rasthaken an der Spitze jedes Rastbolzens die Öffnungen vollständig passiert haben und die Rückseite des Lenkradskeletts hintergreifen.

Eine weitere Befestigung eines Gassackmoduls über Rastbolzen ist in der DE-A-195 41 180 gezeigt. Die am Gassackmodul angeordneten Rastbolzen schieben sich mit einem kegel- oder keilförmigen Vorderende durch vorgespannte Rastelemente, bis sie diese passiert haben und die Rastelemente das Vorderende der Rastbolzen hintergreifen können.

Die Befestigung des Gassacks am Gehäuse muß sicher sein, sollte aber gleichzeitig möglichst schnell durchführbar sein.

Die Erfindung stellt eine Möglichkeit vor, dieses Ziel zu erreichen.

Dies gelingt bei einem oben genannten Gassackmodul durch, die Merkmale des Anspruchs 1. Die Fixierung des Halter-rings am Gehäuse erfolgt über die eingeschobenen Befestigungsmittel, so daß sich gegenüber einer konventionellen Schraubverbindung ein Zeitgewinn erzielen läßt.

Unter dem "keilförmigen Abschnitt" ist ein Abschnitt des Befestigungsmittels mit einem in Längsrichtung des Befestigungsmittels gesehenen keil-, trapez- oder kegelförmigen Querschnitt zu verstehen.

Die Einschubrichtung des Befestigungsmittels kann im wesentlichen senkrecht oder im wesentlichen parallel zu einer Axialrichtung des Gassackmoduls liegen.

Nach einer ersten bevorzugten Ausführungsform der Erfindung ist der Einschubabschnitt durch eine bogenförmige Lasche gebildet. Diese Lasche kann z.B. gefertigt werden, indem zwei bevorzugt parallele Schlitze in den Haltering eingebracht werden und das zwischen den Schlitzen gelegene Material senkrecht aus der Ringebene herausgebogen wird.

Die Befestigung des Halterings am Gehäuse erfolgt in dieser Ausführungsform dadurch, daß die Lasche durch eine im Gehäuse ausgebildete Öffnung ragt und das durch die Lasche geschobene Befestigungsmittel am Haltering und am Gehäuse anliegt, wobei das Befestigungsmittel zwischen der Innenseite der Lasche und dem Gehäuseboden klemmt.

Nach einer zweiten bevorzugten Ausführungsform ist der Einschubabschnitt in wenigstens einem am Haltering angeordneten Rastbolzen ausgebildet. Der Rastbolzen kann einstückig mit dem Haltering ausgebildet sein. Hier wird der Rastbolzen durch das Befestigungsmittel aufgespreizt, was den Haltering am Gehäuse fixiert und ein unbeabsichtigtes Lösen der Rastverbindung verhindert

Das Befestigungsmittel ist bevorzugt ein vom Haltering und vom Gehäuse separates, stiftförmiges Bauteil. Es ist denkbar, mehrere Befestigungsmittel an einem Bauteil anzuordnen.

Der Einschubabschnitt hat bevorzugt zumindest abschnittsweise einen trapez-, kegel- oder keilförmigen Querschnitt, der vorteilhaft dem Querschnitt des Befestigungsmittels angepaßt ist, um die Klemmwirkung zu erhöhen.

Weitere Merkmale und Vorteile der Erfindung ergeben sich aus der nachfolgenden Beschreibung mehrerer Ausführungsbeispiele im Zusammenhang mit den beigefügten Zeichnungen. In diesen zeigen:
- Figur 1 einen schematischen halbseitigen Schnitt eines erfindungsgemäßen Gassackmoduls gemäß einer ersten Ausführungsform;
- Figur 2 den mit X bezeichneten Ausschnitt aus Figur 1 in einer vergrößerten Darstellung;
- Figur 3 einen Schnitt entlang der Linie III-III aus Figur 2;
- Figur 4 einen schematischen halbseitigen Schnitt eines erfindungsgemäßen Gassackmoduls gemäß einer zweiten Ausführungsform;
- Figur 5 den mit X bezeichneten Ausschnitt aus Figur 4 in vergrößerter Darstellung;
- Figur 6 einen schematischen halbseitigen Schnitt eines Gassackmoduls;
- Figur 7 einen Ausschnitt der Baugruppe aus Gassackhaltering und Modulgehäuse aus Figur 6 in einer Draufsicht;
- Figur 8 einen Schnitt entlang der Linie VIII-VIII aus Figur 7;
- Figur 9 einen schematischen halbseitigen Schnitt eines weiteren Gassackmoduls; und
- Figur 10 den mit X bezeichneten Ausschnitt aus Figur 9 in einer vergrößerten Darstellung.

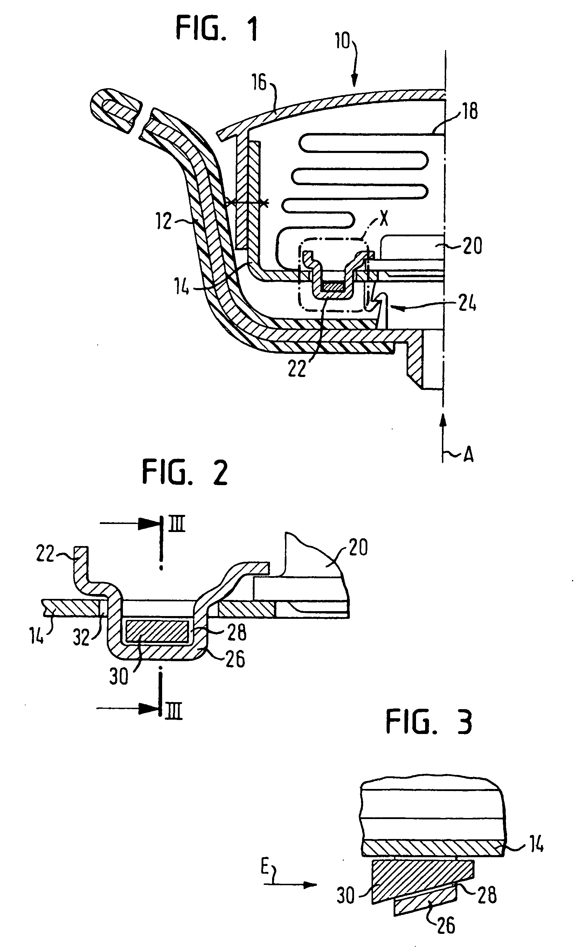

Das in Figur 1 gezeigte Gassackmodul 10 gemäß einer ersten Ausfiihrungsform der Erfindung, das für den Einbau in einem Lenkrad 12 vorgesehen ist, weist ein Modulgehäuse 14 mit einer daran angeordneten Abdeckkappe 16, einen im Modulgehäuse 14 angeordneten, gefalteten Gassack 18, einen ebenfalls im Modulgehäuse angeordneten Gasgenerator 20 sowie einen den Gassack 18 und den Gasgenerator 20 am Modulgehäuse 14 befestigenden Haltering 22 auf.

Das Gassackmodul 10 ist auf bekannte Weise, z.B. über eine Rastverbindung 24 mit dem Lenkrad 12 verbunden.

Die in den Figuren verwendete Richtung A entspricht einer Axialrichtung des Gassackmoduls und beschreibt üblicherweise auch die Austrittsrichtung des Gassacks aus dem Modul. Diese Richtung fällt bei einem Lenkradmodul mit der Lenkradachse zusammen.

Der Haltering 22 ist in den Gassack eingelegt, so daß der Gassack 18 um den Einblasmund herum zwischen dem Haltering 22 und dem Modulgehäuse 14 geklemmt ist.

Der Haltering 22 weist entlang seines Umfangs in Abständen mehrere, z.B. vier, bogenförmige Laschen 26 auf, die hier durch parallele Einschnitte im Haltering 22 gebildet sind, wobei der zwischen den Einschnitten liegende Ringabschnitt aus der Ringebene herausgebogen ist. Die Laschen 26 bilden Einschubabschnitte 28 für Befestigungsmittel 30 mit keilförmigen Abschnitten, wobei die Befestigungsmittel 30 separate Teile bilden.

Der Haltering 22 ist so angeordnet, daß die Laschen 26 durch im Modulgehäuse 14 vorgesehene Öffnungen 32 hindurch zur Außenseite des Gassackmoduls ragen. Die keilförmigen Abschnitte der Befestigungsmittel 30 sind so in die Einschubabschnitte 28 eingeschoben, daß sie sowohl an den Innenseiten der Laschen 26 als auch am Boden des Modulgehäuses 14 anliegen.

Die Befestigungsmittel 30 sind so weit in die Einschubabschnitte 28 eingeschoben, daß sie darin fest verklemmt sind. Über diese Klemmwirkung wird der Haltering 22 am Modulgehäuse 14 fixiert.

Die Einschubrichtung E der Befestigungsmittel ist bei dieser Ausführungsform senkrecht zur Modulachse A.

In Axialrichtung der Befestigungsmittel 30 gesehen, d.h. in den Figuren in einem Längsschnitt entlang der Pfeilrichtung E, haben diese einen keil-, kegel-oder trapezförmigen Querschnitt. Der Querschnitt der Laschen 26 ist in Längsrichtung dem Querschnitt der Befestigungsmittel 30 angepaßt, so daß auch diese einen keil-, kegel- oder trapezförmigen Querschnitt aufweisen (siehe Figur 3).

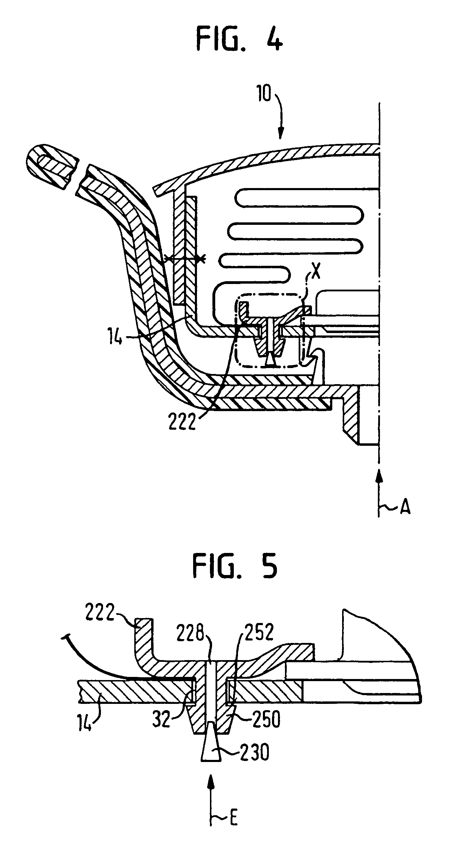

In den Figuren 4 und 5 ist eine zweite Ausführungsform eines erfindungsgemäßen Gassackmoduls 10 gezeigt. Hier ist das Prinzip der Befestigung des Halterings 222 am Gehäuse 14 durch das Verklemmen eines keilförmigen Befestigungsmittel 230 auf andere Weise verwirklicht.

Wie in Figur 5 zu sehen ist, sind am Haltering 222 einstückig mit diesem mehrere Rastbolzen 250 angeformt, z.B. vier Stück, die in Längsrichtung jeweils einen Einschubabschnitt 228 aufweisen. Die Längsrichtung der Rastbolzen 250 fällt mit der Axialrichtung A des Gassackmoduls zusammen, wenn der Haltering in das Gassackmodul eingesetzt ist. Die Rastbolzen 250 sind mit Anlageflächen 252 versehen, die an der Unterseite des Modulgehäuses 14 anliegen. Die Befestigungsmittel 230 werden eingeschoben, nachdem die Rastbolzen 250 durch die dafür vorgesehenen Öffnungen 32 im Gassack 18 und im Modulgehäuse 14 gesteckt wurden. Durch das Einschieben der keilförmigen Befestigungsmittel 230 von der Modulunterseite her werden die Wandungen der Einschubabschnitte 228 und damit der Rastbolzen 250 auseinandergedrückt und so die Rastbolzen 250 in den Öffnungen 32 des Modulgehäuses 14 gegen Zug in Axialrichtung A gesichert.

In dieser Ausführungsform liegt die Einschubrichtung E der Befestigungsmittel parallel zur Modulachse A.

Ein weiteres Gassackmodul ist in den Figuren 4 bis 7 gezeigt.

Bei diesem Gassackmodul ist die Verbindung zwischen dem Haltering 322 und dem Gehäuse 314 durch eine Verflechtung von am Haltering 322 angeordneten Zungen 330 und am Gehäuse 314 ausgebildeten Stegen 340 gebildet.

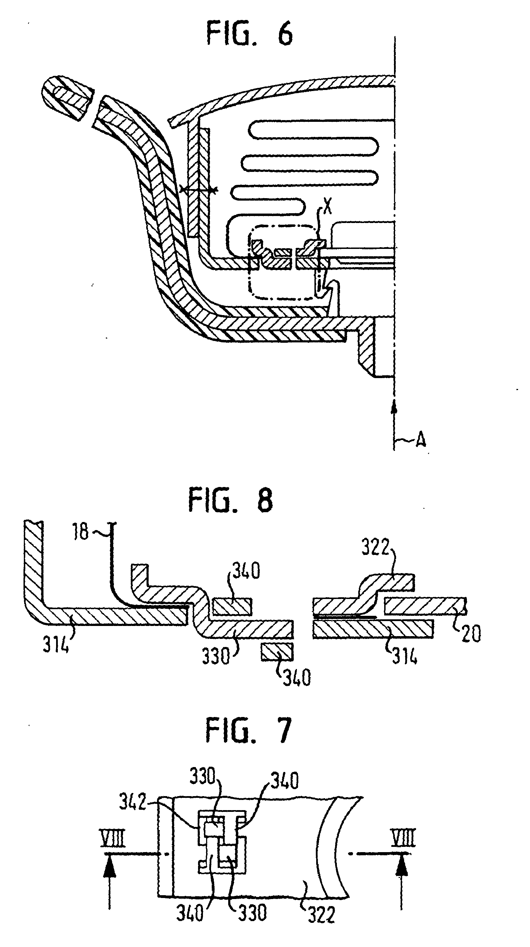

Wie in Figur 7 zu sehen ist, sind im Haltering 322 durch Bildung eines S-förmigen Schlitzes 342 zwei gegenläufig gerichtete Zungen 330 geformt. Im Modulgehäuse 314 sind an der gleichen Stelle zwei senkrecht zu den Zungen 330 verlaufende Stege 340, ebenfalls durch Vorsehen von Schlitzen im Modulgehäuse 314, ausgebildet.

Mehrere derartige Schlitz/Zungen-Paare 330, 340, z.B. vier Stück, sind entlang des Umfangs des Rings 322 verteilt.

Die Zungen 330 greifen durch Öffnungen im Gassack 18 hindurch und sind mit den Stegen 340 verflochten.

Auch eine andere Geometrie von Zungen und Stegen ist natürlich denkbar, genauso wie es möglich ist, umgekehrt die Zungen am Gehäuse auszubilden und die Stege am Haltering.

Der Vorteil an einer solchen Verbindung liegt unter anderem im geringen Platzbedarf in Axialrichtung A sowie darin, daß keine zusätzlichen Bauteile benötigt werden.

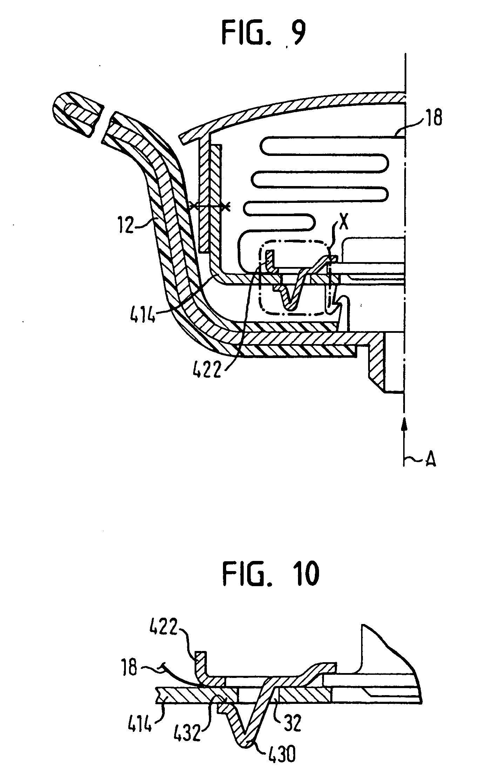

In den Figuren 9 und 10 ist noch eine andere Art der Befestigung eines Halterings 422 an einem Modulgehäuse 414 gezeigt.

Am Haltering 422 sind entlang des Umfangs verteilt mehrere gebogene Rastarme 430 ausgebildet, deren Ausdehnung in Radialrichtung größer ist als die Ausdehnung der Öffnungen 32 des Modulgehäuses 414.

Die Rastarme 430 weisen eine so hohe Elastizität auf, daß sie in der einen Richtung durch die Öffnungen 32 unter elastischer Verformung hindurchgleiten können. Nach dem Durchgleiten gelangen Rastflächen 432 in Anlage an den Boden des Gehäuses 414 und verhindern so eine Rückbewegung der Rastarme 430. Hierdurch wird der Haltering 422 am Modulgehäuse 414 fixiert. Auch in diesem Fall greifen die Rastarme 430 durch Öffnungen im Gassack 18 und fixieren so den Gassack 18.

Die beschriebenen Verbindungen lassen sich natürlich auch zur Befestigung eines Gassacks und/oder eines Gasgenerators an einem Gasgeneratorträger einsetzen.

## Patentansprüche

1. Gassackmodul mit einem Gehäuse (14), einem im Gehäuse (14) aufgenommenen Gassack (18), einem Gasgenerator (20) und einem Haltering (22; 222), über den der Gassack (18) und/oder der Gasgenerator (20) am Gehäuse (14) befestigt ist/sind,
wobei wenigstens ein separates Befestigungsmittel (30; 230) vorgesehen ist, das wenigstens einen keilförmigen Abschnitt aufweist,
**dadurch gekennzeichnet, daß** der Haltering (22; 222) wenigstens einen Einschubabschnitt (28; 228) für den keilförmigen Abschnitt aufweist und
daß der keilförmige Abschnitt des Befestigungsmittels (30; 230) in seiner Endstellung unter Klemmung in den Einschubabschnitt (28; 228) eingeschoben ist und der Haltering (22; 222) über die Klemmwirkung am Gehäuse (14) fixiert ist.

2. Gassackmodul nach Anspruch 1, **dadurch gekennzeichnet, daß** die Einschubrichtung (E) des Befestigungsmittels (30) im wesentlichen senkrecht zu einer Axialrichtung (A) des Gassackmoduls (10) liegt.

3. Gassackmodul nach Anspruch 1, **dadurch gekennzeichnet, daß** die Einschubrichtung (E) des Befestigungsmittels (230) im wesentlichen parallel zu einer Axialrichtung (A) des Gassackmoduls (10) liegt.

4. Gassackmodul nach einem der Ansprüche 1 und 2, **dadurch gekennzeichnet, daß** der Einschubabschnitt (28) durch eine bogenförmige Lasche (26) gebildet ist.

5. Gassackmodul nach Anspruch 4, **dadurch gekennzeichnet, daß** die Lasche (26) durch eine im Gehäuse (14) ausgebildete Öffnung (32) ragt.

6. Gassackmodul nach Anspruch 5, **dadurch gekennzeichnet, daß** das Befestigungsmittel (30) am Haltering (22) und am Gehäuse (14) anliegt.

7. Gassackmodul nach einem der Ansprüche 1 bis 3, **dadurch gekennzeichnet, daß** der Einschubabschnitt (228) in wenigstens einem am Haltering (222) angeordneten Rastbolzen (250) ausgebildet ist.

8. Gassackmodul nach Anspruch 7, **dadurch gekennzeichnet, daß** der Rastbolzen (250) einstückig mit dem Haltering (222) ausgebildet ist.

9. Gassackmodul nach einem der Ansprüche 7 und 8, **dadurch gekennzeichnet, daß** der Rastbolzen (250) durch ein stiftförmiges Befestigungsmittel (230) aufgespreizt wird.

10. Gassackmodul nach einem der vorhergehenden Ansprüche, **dadurch gekennzeichnet, daß** das Befestigungsmittel (30; 230) ein vom Haltering (22; 222) und vom Gehäuse (14) separates Bauteil ist.

11. Gassackmodul nach einem der vorhergehenden Ansprüche, **dadurch gekennzeichnet, daß** der Einschubabschnitt (28;228) zumindest abschnittsweise einen trapez- oder keilförmigen Querschnitt aufweist.

12. Gassackmodul nach einem der vorhergehenden Ansprüche, **dadurch gekennzeichnet, daß** sich der keilförmige Abschnitt über einen Großteil der axialen Länge des Befestigungsmittels (30; 230) erstreckt.

## Claims

1. A gas bag module comprising a housing (14), a gas bag (18) held in the housing (14), a gas generator (20), and a holding ring (22; 222), by means of which the gas bag (18) and/or the gas generator (20) is/are fastened to the housing (14),
at least one separate fastening means (30; 230) being provided, which has at least one wedge-shaped section,
**characterized in that** the holding ring (22; 222) has at least one push-in section (28; 228) for the wedge-shaped section, and
that the wedge-shaped section of the fastening means (30; 230) is pushed into the push-in section (28; 228) to be wedged therein in its final position, and the holding ring (22; 222) is fixed in place on the housing (14) by the wedging effect.

2. The gas bag module according to Claim 1, **characterized in that** the push-in direction (E) of the fastening means (30) is substantially perpendicular to an axial direction (A) of the gas bag module (10).

3. The gas bag module according to Claim 1, **characterized in that** the push-in direction (E) of the fastening means (230) is substantially parallel to an axial direction (A) of the gas bag module (10).

4. The gas bag module according to either of Claims 1 and 2, **characterized in that** the push-in section (28) is formed by a curved tongue (26).

5. The gas bag module according to Claim 4, **characterized in that** the tongue (26) projects through an opening (32) formed in the housing (14).

6. The gas bag module according to Claim 5, **characterized in that** the fastening means (30) lies against the holding ring (22) and the housing (14).

7. The gas bag module according to any of Claims 1 to 3, **characterized in that** the push-in section (228) is formed in at least one detent pin (250) arranged on the holding ring (222).

8. The gas bag module according to Claim 7, **characterized in that** the detent pin (250) is formed in one piece with the holding ring (222).

9. The gas bag module according to either of Claims 7 and 8, **characterized in that** the detent pin (250) is spread apart by a pin-shaped fastening means (230).

10. The gas bag module according to any of the preceding claims, **characterized in that** the fastening means (30; 230) is a component that is separate from the holding ring (22; 222) and from the housing (14).

11. The gas bag module according to any of the preceding claims, **characterized in that** the push-in section (28; 228) has at least partially a trapezoidal or wedge-shaped cross-section.

12. The gas bag module according to any of the preceding claims, **characterized in that** the wedge-shaped section extends over a majority of the axial length of the fastening means (30; 230).

## Revendications

1. Module de coussin à gaz comportant un boîtier (14), un coussin à gaz (18) reçu dans le boîtier (14), un générateur de gaz (20) et une bague de retenue (22 ; 222) au moyen de laquelle le coussin à gaz (18) et/ou le générateur de gaz (20) est/sont retenu(s) sur le boîtier (14),
dans lequel est prévu au moins un moyen de fixation (30 ; 230) séparé qui présente au moins un tronçon en forme de clavette,
**caractérisé en ce que** la bague de retenue (22 ; 222) présente au moins un tronçon d'enfichage (28 ; 228) pour le tronçon en forme de clavette, et
**en ce que** dans sa position d'extrémité, le tronçon en forme de clavette du moyen de fixation (30 ; 230) est enfiché par serrage dans le tronçon d'enfichage (28 ; 228), et la bague de retenue (22 ; 222) est fixée sur le boîtier (14) par l'effet de serrage.

2. Module de coussin à gaz selon la revendication 1, **caractérisé en ce que** la direction d'enfichage (E) du moyen de fixation (30) est sensiblement perpendiculaire à la direction axiale (A) du module de coussin à gaz (10).

3. Module de coussin à gaz selon la revendication 1, **caractérisé en ce que** la direction d'enfichage (E) du moyen de fixation (230) est sensiblement parallèle à la direction axiale (A) du module de coussin à gaz (10).

4. Module de coussin à gaz selon l'une des revendications 1 et 2, **caractérisé en ce que** le tronçon d'enfichage (28) est formé par une patte (26) de forme arquée.

5. Module de coussin à gaz selon la revendication 4, **caractérisé en ce que** la patte (26) fait saillie à travers une ouverture (32) réalisée dans le boîtier (14).

6. Module de coussin à gaz selon la revendication 5, **caractérisé en ce que** le moyen de fixation (30) est en appui sur la bague de retenue (22) et sur le boîtier (14).

7. Module de coussin à gaz selon l'une des revendications 1 à 3, **caractérisé en ce que** le tronçon d'enfichage (228) est réalisé dans au moins un boulon d'enclenchement (250) agencé sur la bague de retenue (222).

8. Module de coussin à gaz selon la revendication 7, **caractérisé en ce que** le boulon d'enclenchement (250) est réalisé d'un seul tenant avec la bague de retenue (222).

9. Module de coussin à gaz selon l'une des revendications 7 et 8, **caractérisé en ce que** le boulon d'enclenchement (250) est écarté par un moyen de fixation en forme de goupille (230).

10. Module de coussin à gaz selon l'une des revendications précédentes, **caractérisé en ce que** le moyen de fixation (30 ; 230) est un composant séparé de la bague de retenue (22 ; 222) et du boîtier (14).

11. Module de coussin à gaz selon l'une des revendications précédentes, **caractérisé en ce que** le tronçon d'enfichage (28 ; 228) présente au moins partiellement une section transversale en forme de trapèze ou en forme de clavette.

12. Module de coussin à gaz selon l'une des revendications précédentes, **caractérisé en ce que** le tronçon en forme de clavette s'étend sur une grande partie de la longueur axiale du moyen de fixation (30 ; 230).
